# EUROPEAN PATENT SPECIFICATION

(11) **EP 1 995 658 B1**
(45) Date of publication and mention of the grant of the patent: **03.11.2010**
(21) Application number: 07010378.3
(22) Date of filing: 24.05.2007
(51) Int. Cl.: G06F 3/033, H01Q 1/10, H01Q 1/22, H01Q 1/24, H01Q 1/44, H01Q 9/30

(54) **Touch pen having an antenna and electronic device having the touch pen**
Touch-Pen mit Antenne und elektronische Vorrichtung mit dem Touch-Pen
Stylo tactile comportant une antenne et dispositif électronique comportant le stylo tactile

(43) Date of publication of application: 26.11.2008
(73) Proprietor: Giga-Byte Communications, Inc., Taipei (TW); Giga-Byte Technology Co., Ltd., Xindian City, Taipei County 231 (TW)
(72) Inventor: Chen, Li-Ying, Hsin-Tien Taipei Hsien (TW); Teng, Ju-Wen, Hsin-Tien Taipei Hsien (TW)
(74) Representative: Urner, Peter

(56) References cited:
- EP-A- 1 635 421
- EP-A- 1 653 325
- US-A- 5 889 512
- US-B1- 6 262 684
- US-B1- 6 275 193

## Description

### 1. Field of the Invention

The present invention relates to an electric touch pen, and in particular to an electric touch pen having an antenna.

### 2. Description of Prior Art

The advancement of modern science and technology prompts the development of the computer industry. So far, computer hardware not only plays an important role in industry and commerce, but also becomes a good assistant in daily life because of the versatility and miniaturization thereof. The rise and development of Internet indeed makes the computer to become an important part of life entertainment. Since the Internet is capable of transmitting information to anyplace in the world, people can receive various kinds of information by using the computer at home. Even, people can watch various movies or television programs via the Internet.

Then, the development of the wireless signal technology improves the capability of Internet to a nearly boundless extent. Therefore, with the transmission of wireless signals, people can use a portable electronic device functioning as a computer to access the Internet or receive video/audio information at an indoor or outdoor site. In order to facilitate the portable computer device to receive the wireless signals completely, besides the support of hardware and software, it is necessary to provide an antenna to receive the wireless signals.

Since the wireless signal technology develops very fast, the common portable electronic device that has a function of a computer, such as a popular personal digital assistant, is not provided with an antenna. Therefore, it is necessary to provide an additional antenna device to help the personal digital assistant to receive the wireless signals. However, it is inconvenient to carry such an additional antenna. Further, the user may need to buy different kinds of antennas depending on the specifications of the portable devices, which causes a further trouble to the user.

In the latter conventional portable personal digital assistant, in order to solve the problem caused by the addition antenna, the personal digital assistant is particularly provided with a hidden antenna, thereby solving the inconvenience caused by providing the antenna externally. However, the structure of the personal digital assistant is limited and the antenna is different in properties and specifications, the personal digital assistant cannot be additionally provided with an antenna for receiving various signals. Thus, it is necessary to find another solution whereby the personal digital assistant can receive the wireless signals easily and conveniently.

EP 1 635 421 A1 and EP 1 653 325 A1 disclose a touch pen combined with an antenna in a portable wireless terminal. The touch pen comprises a built-in-antenna within the shell thereof. The touch pen further comprises a shaft connected to a head wherein the shaft is provided at its open end with an annular blocking means so that the antenna cannot be removed from the shell of the pen. When the pen is used, pen and antenna are removed together from the portable wireless terminal. Therefore, the known touch pen cannot provide a touch input function and a wireless signal receiving function simultaneously. The document EP 1 653 325 A1 discloses a touch pen having the features of the preamble of claim 1.

US 5,889,512 discloses an extendable stylus including a body and an extension telescopically engaged with the body. The extension is a telescopically extendable antenna which is provided in the interior of the stylus body so that the antenna can be drawn out of the body through an opening provided at the upper side of the stylus body. When the antenna is telescopically drawn out of the body the lower, outer telescope element of the antenna is still in electric contact with the stylus body so that the antenna is connected to an electronic device when the stylus is accommodated in a respective bore in the housing of the electronic device. Although the antenna can be removed from the stylus by disassembling the whole stylus, the antenna is always provided in the stylus when the stylus is in use. This leads to the disadvantage that the antenna is not connected to the electronic device when the stylus is used as an inputting interface for the electronic device.

US 6, 275,193 B1 discloses an antenna providing touch screen stylus. In this embodiment a tubular antenna is connected to the apparatus provided with a touch screen and the stylus is accommodated in the tubular inner space of the antenna when the stylus is not in use. Alternatively, the stylus can be used as antenna itself as long as the stylus is connected to the apparatus. However, when the stylus is removed for being used as data entering means the capacity of sending or receiving signals is remarkably reduced.

### SUMMARY OF THE INVENTION

The present invention is to provide a touch pen having a hidden and separate antenna and an electronic device having such a touch pen. The touch pen that is used to touch the screen of the electronic device is provided with an antenna. The antenna is hidden, and during the use of the touch pen, the antenna can be separated so as to electrically connect with the electronic device, thereby keeping the electronic device to have a function of receiving wireless signals.

In order to achieve the above objects, the present invention provides a touch pen according to claim 1.

### BRIEF DESCRIPTION OF THE DRAWINGS

Fig. 1 is an exploded perspective view showing the structure of the present invention;
Fig. 2 is an assembled view of the present invention;
Fig. 3 is a schematic view (I) showing the operation of the present invention;
Fig. 4 is a partially enlarged view of the present invention;
Fig. 5 is a schematic view (II) showing the operation of the present invention; and
Fig. 6 is a schematic view showing the operation of another embodiment of the present invention.

### DETAILED DESCRIPTION OF THE INVENTION

The technical contents of the present invention will be explained with reference to the accompanying drawings.

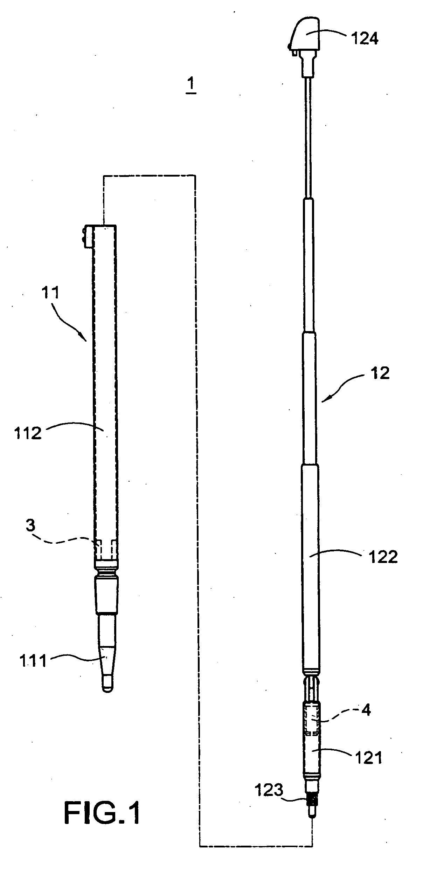

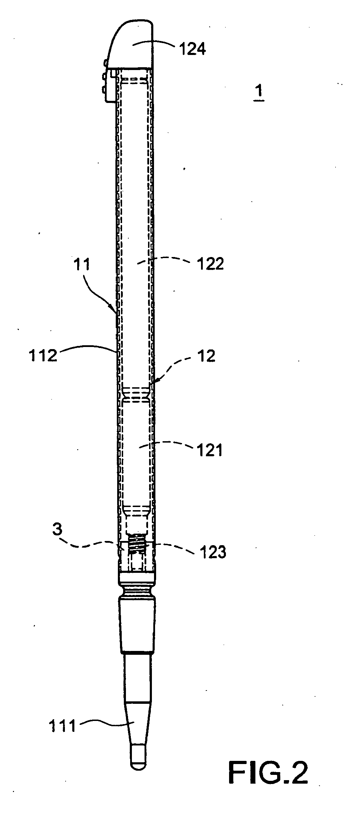

Fig. 1 and Fig. 2 are an exploded perspective view and an assembled view of the present invention, respectively. It can be seen that, the touch pen 1 of the present invention includes a pen tube 11 and an antenna 12. The pen tube 11 has a touch end 111 and a tube body 112. The touch end 111 is used to touch a screen of an electronic device. The tube body 112 is a hollow metallic tube body that is used to accommodate the antenna 12. The inner periphery of the bottom of the tube body 112 is provided with metallic elastic pieces 3. In the present embodiment, there is a plurality of metallic elastic pieces. Furthermore, the antenna 12 is formed into a rod-like shape for receiving the wireless signals. The antenna 12 has a fixed tube body 121 and a telescopic tube body 122. The interior of the fixed tube body 121 is provided with electronic circuit 4. The fixed tube body 121 and the telescopic tube body 122 are electrically connected to each other, thereby forming a wireless signal reception region. Further, the front end of the fixed tube body 121 has a contact end 123. The contact end 123 is made of metal and is electrically connected with the internal electronic circuit 4. The top of the telescopic tube 122 is connected to a cover 124. After the antenna 12 is accommodated in the hollow tube body 112, the cover 124 is connected to the top of the hollow tube body 112, thereby fixing the position of the antenna 12 with respect to the pen tube 11. Further, after the antenna 12 is accommodated in the tube body 112, the touch end 123 of the antenna 12 is adhered to the metallic elastic piece 3 provided in the tube body 112, so that the electronic circuit 114 provided in the antenna 12 can be electrically connected with the tube body 112. The complete assembly of the present invention is shown in Fig. 2.

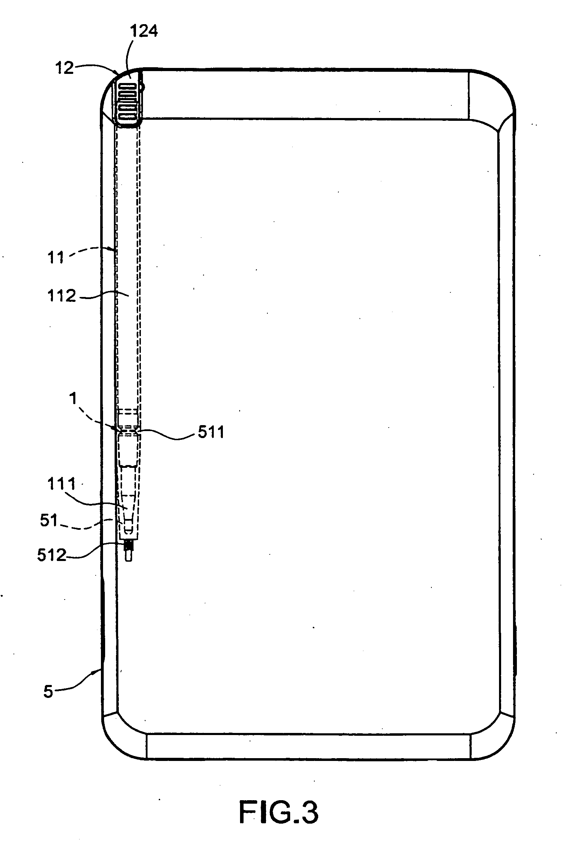

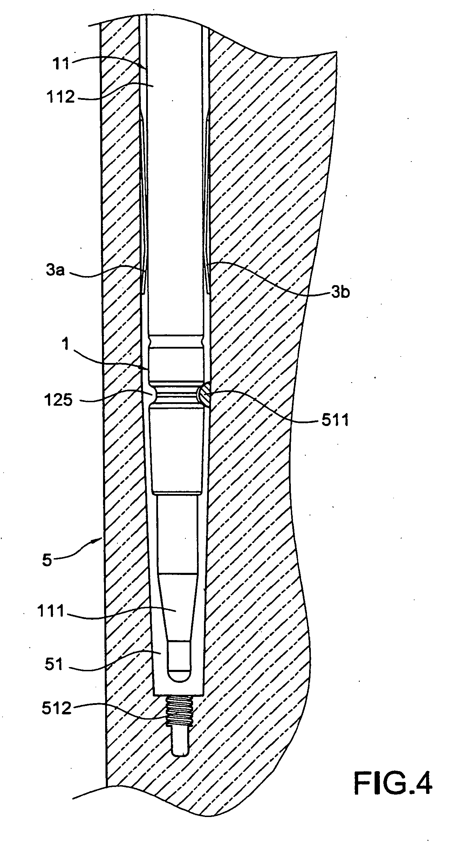

Fig. 3 is a schematic view showing the operation of the present invention, and Fig. 4 is a partially enlarged view of the present invention. As shown in Fig.3, the touch pen 1 of the present invention can operate by means of holding it to touch an electronic device 5. In the present embodiment, the electronic device 5 is a personal digital assistant, in which the back surface of the housing of the electronic device 5 is provided with an accommodating trough 51. The inner periphery of the accommodating trough 51 is provided with a protruding pillar 511. The upper end of the protruding pillar 511 is provided with a plurality of metallic elastic pieces 3a and 3b. The metallic elastic pieces 3a and 3b are electrically connected with the electronic device 5. Further, the bottom of the accommodating trough 51 is provided with a conductive pillar 512. Therefore, when the touch pen 1 is accommodated in the accommodating trough 51 and located in a predetermined position, the protruding pillar 511 is exactly engaged in a recessed region 125 formed between the touch end 111 of the pen tube 11 and the tube body 112, thereby fixing the position of the touch pen 1 in the accommodating trough 51. Further, the plurality of metallic elastic pieces 3a and 3b provided on the upper end of the protruding pillar 511 abut against the outer surface of the tube body 112 collectively, so that the antenna 12 within the tube body 112 can be electrically connected with the electronic device 5 via the tube body 112 and the metallic elastic pieces 3a and 3b. As a result, the electronic device 5 can receive wireless signals via the antenna 12 in the touch pen 1.

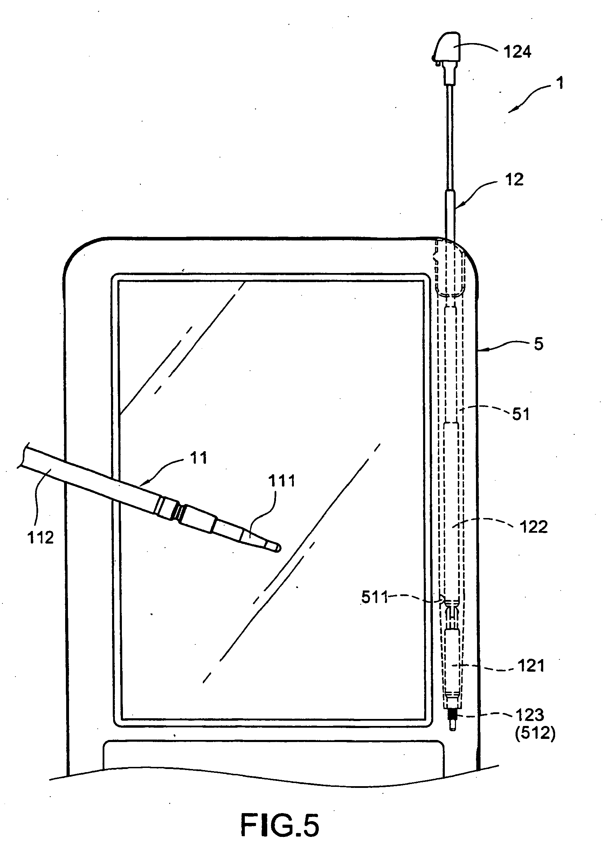

With reference to Fig. 5, it is a schematic view showing another operation of the present invention. It can be seen that, when the user intends to use the touch pen 1 to operate the electronic device 5, the user can draw out the antenna 12 from the tube body 112. Then, after the telescopic tube body 122 gets elongated, the antenna 12 is accommodated in the accommodating trough 51 while the contact end 123 of the antenna 12 is electrically connected with the conductive pillar 512 on the bottom of the accommodating trough 51. In this way, when the user uses the pen tube 11 of the touch pen 1 to operate the electronic device 5, the electronic device 5 can receive the wireless signals within the reception region via the antenna 12. Therefore, the user can use the electronic device 5 to receive the resources of the wireless Internet or receive/transmit signals.

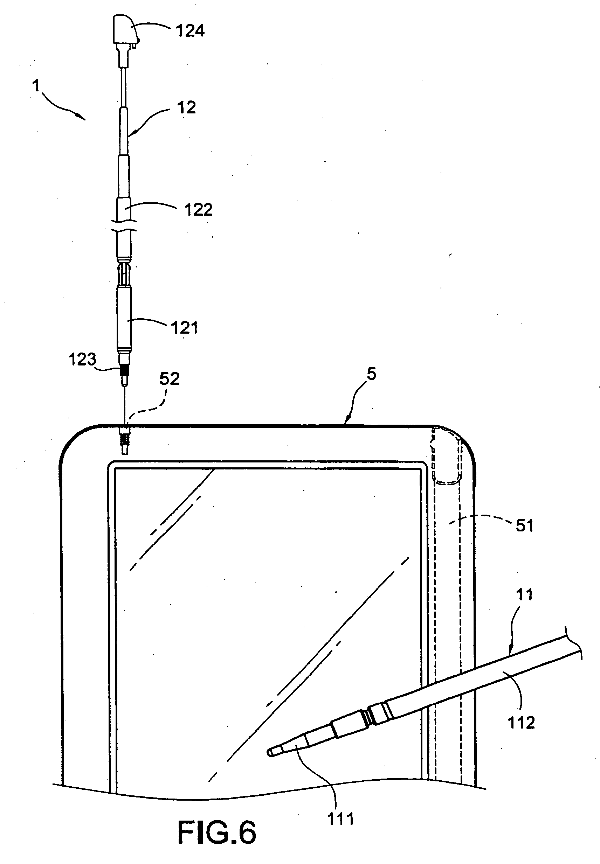

With reference to Fig. 6, it is a schematic view showing the operation of another embodiment of the present invention. As shown in the figure, one end of the electronic device 5 (in the present embodiment, e.g. a personal digital assistant) is provided with a conductive trough 52. In the present embodiment, the conductive trough 52 is provided at a position corresponding to that of the accommodating trough 41. The conductive trough 52 is electrically connected with the internal circuit of the electronic device 5. When the user intends to use the touch pen 1 to operate the electronic device 5, the user can draw out the antenna 12 from the tube body 111 and elongate the telescopic tube body 122 of the antenna. Then, the contact end 123 of the antenna 12 is disposed in the conductive trough 52 of the electronic device 5. In the present embodiment, the antenna 12 is screwed to connect with the conductive trough 52 and thus is electrically connected with the antenna 12. As a result, the electronic device 5 can receive the wireless signals via the antenna 12, thereby utilizing the resources of wireless Internet or receiving other signals.

## Claims

1. A touch pen (1), comprising:
a) a pen tube (11) having a hollow metallic tube body (112), one end of the hollow metallic tube body (112) defining a touch end (111) and the other end of the hollow metallic tube body (112) defining an opened end; and
b) an antenna (12), said antenna (12) comprising a fixed tube body (121) and a telescopic tube body (122) connected to one end of the fixed tube body (121), the other end of the fixed tube body (121) having a contact end (123); and
- wherein the touch pen (1) is adapted to be accommodated into an electronic device (5); and
- wherein the antenna is adapted to be arranged inside the hollow metallic tube body (112), and wherein the hollow metallic tube body (112) of the pen tube (11) is adapted to house the antenna (12); and
- wherein the touch pen (1) is adapted to be electrically connected with said electronic device (5) when accommodated inside the electronic device (5);
- wherein the tube body (112) and the contact end (123) of the fixed tube body (121) are adapted to electrically connect the electronic device (5) to the antenna (12) via the pen tube (11) when the pen tube (11) and antenna (12) are both accommodated one inside the other in the electronic device (5);
**characterized in that**
- said antenna (12) and pen tube (11) are adapted to detach the antenna (12) from the hollow metallic tube body (112) through the opened end of the hollow metallic tube body (112) and,
wherein the contact end (123) of the fixed tube body (121) is adapted to electrically connect the electronic device (5) to the antenna (12) when only the antenna (12) is accommodated in the electronic device.

2. The touch pen having an antenna according to claim 1, wherein an inner periphery of the bottom of the metallic tube body (112) is provided with a metallic elastic piece (3) for abutting against the antenna (12).

3. The touch pen having an antenna according to claim 2, wherein the antenna (12) abuts against the metallic elastic piece (3) and is electrically connected with the metallic tube body (112) when the antenna (12) is accommodated in the hollow metallic tube body (112).

4. The touch pen having an antenna according to claim 1, wherein an interior of the fixed tube body (121) is provided with an electronic circuit (4).

5. The touch pen having an antenna according to claim 4, wherein the contact end (123) is made of metal and is electrically connected with the electronic circuit (4) in the fixed tube body (121).

6. The touch pen having an antenna according to claim 1, wherein a top end of the telescopic tube body (122) is further connected to a cover (124), and the cover (124) is able to snap fit with the open end of the metallic tube body (112).

## Patentansprüche

1. Berührungsstift (1), der umfasst:
a) ein Stiftrohr (11) mit einem hohlen Metallrohrkörper (112), wobei ein Ende des hohlen Metallrohrkörpers (112) ein Berührungsende (111) definiert und das andere Ende des hohlen Metallrohrkörpers (112) ein offenes Ende definiert; und
b) eine Antenne (12), wobei die Antenne (12) einen festen Rohrkörper (121) und einen Teleskoprohrkörper (122), der mit einem Ende des festen Rohrkörpers (121) verbunden ist, während das andere Ende des festen Rohrkörpers (121) ein Kontaktende (123) besitzt, enthält; und
- wobei der Berührungsstift (1) dazu ausgelegt ist, in einer elektronischen Vorrichtung (5) aufgenommen zu werden; und
- wobei die Antenne dazu ausgelegt ist, in dem hohlen Metallrohrkörper (112) angeordnet zu werden, wobei der hohle Metallrohrkörper (112) des Stiftrohrs (11) dazu ausgelegt ist, die Antenne (12) aufzunehmen; und
- wobei der Berührungsstift (1) dazu ausgelegt ist, mit der elektronischen Vorrichtung (5) elektrisch verbunden zu werden, wenn er in der elektronischen Vorrichtung (5) aufgenommen ist;
- wobei der Rohrkörper (112) und das Kontaktende (123) des festen Rohrkörpers (121) dazu ausgelegt sind, die elektrische Vorrichtung (5) mit der Antenne (12) über das Stiftrohr (11) elektrisch zu verbinden, wenn das Stiftrohr (11) und die Antenne (12) in der elektronischen Vorrichtung (5) ineinander aufgenommen sind;
**dadurch gekennzeichnet, dass**
- die Antenne (12) und das Stiftrohr (11) dazu ausgelegt sind, die Antenne (12) durch das offene Ende des hohlen Metallrohrkörpers (112) von dem hohlen Metallrohrkörper (112) zu lösen, und
wobei das Kontaktende (123) des festen Rohrkörpers (121) dazu ausgelegt ist, die elektronische Vorrichtung (5) mit der Antenne (12) nur dann elektrisch zu verbinden, wenn die Antenne (12) in der elektronischen Vorrichtung aufgenommen ist.

2. Berührungsstift mit einer Antenne nach Anspruch 1, wobei ein innerer Umfang des Bodens des Metallrohrkörpers (112) mit einem elastischen Metallteil (3) versehen ist, um an der Antenne (12) anzuliegen.

3. Berührungsstift mit einer Antenne nach Anspruch 2, wobei die Antenne (12) an dem elastischen Metallteil (3) anliegt und mit dem Metallrohrkörper (112) elektrisch verbunden ist, wenn die Antenne (12) in dem hohlen Metallrohrkörper (112) aufgenommen ist.

4. Berührungsstift mit einer Antenne nach Anspruch 1, wobei ein Innenraum des festen Rohrkörpers (112) mit einer elektronischen Schaltung (4) versehen ist.

5. Berührungsstift mit einer Antenne nach Anspruch 4, wobei das Kontaktende (123) aus Metall hergestellt ist und mit der elektronischen Schaltung (4) in dem festen Rohrkörper (121) elektrisch verbunden ist.

6. Berührungsstift mit einer Antenne nach Anspruch 1, wobei ein oberes Ende des Teleskoprohrkörpers (122) ferner mit einer Abdeckung (124) verbunden ist und die Abdeckung (124) an dem offenen Ende des Metallrohrkörpers (112) einrasten kann.

## Revendications

1. Stylo tactile (1), comprenant :
a) un tube de stylo (11) ayant un corps en tube métallique creux (112), une extrémité du corps en tube métallique creux (112) définissant une extrémité tactile (111) et l'autre extrémité du corps en tube métallique creux (112) définissant une extrémité ouverte ; et
b) une antenne (12), ladite antenne (12) comprenant un corps de tube fixe (121) et un corps de tube télescopique (122) relié à une extrémité du corps de tube fixe (121), l'autre extrémité du corps de tube fixe (121) ayant une extrémité de contact (123) ; et
- dans lequel le stylo tactile (1) est adapté à être logé dans un dispositif électronique (5) ; et
- dans lequel l'antenne est adaptée à être agencée à l'intérieur du corps en tube métallique creux (112), et dans lequel le corps en tube métallique creux (112) du tube de stylo (11) est adapté pour abriter l'antenne (12) ; et
- dans lequel le stylo tactile (1) est adapté à être connecté électriquement avec ledit dispositif électronique (5) quand il est logé à l'intérieur du dispositif électronique (5) ;
- dans lequel le corps en tube (112) et l'extrémité de contact (123) du corps de tube fixe (121) sont adaptés pour connecter électriquement le dispositif électronique (5) à l'antenne (12) via le tube de stylo (11) quand le tube de stylo (11) et l'antenne (12) sont logés tous les deux l'un à l'intérieur de l'autre dans le dispositif électronique (5) ;
**caractérisé en ce que**
- ladite antenne (12) et le tube de stylo (11) sont adaptés à détacher l'antenne (12) depuis le corps en tube métallique creux (112) à travers l'extrémité ouverte du corps en tube métallique creux (112) et,
dans lequel l'extrémité de contact (123) du corps de tube fixe (121) est adaptée à connecter électriquement le dispositif électronique (5) à l'antenne (12) quand seule l'antenne (12) est logée dans le dispositif électronique.

2. Stylo tactile ayant une antenne selon la revendication 1, dans lequel une périphérie intérieure du fond du corps en tube métallique (112) est pourvue d'une pièce élastique métallique (3) pour venir buter contre l'antenne (12).

3. Stylo tactile ayant une antenne selon la revendication 2, dans lequel l'antenne (12) vient buter contre la pièce élastique métallique (3) et est connectée électriquement avec le corps en tube métallique (112) quand l'antenne (12) est logée dans le corps en tube métallique creux (112).

4. Stylo tactile ayant une antenne selon la revendication 1, dans lequel l'intérieur du corps de tube fixe (121) est pourvu d'un circuit électronique (4).

5. Stylo tactile ayant une antenne selon la revendication 4, dans lequel l'extrémité de contact (123) est réalisée en métal et est électriquement connectée avec le circuit électronique (4) dans le corps de tube fixe (121).

6. Stylo tactile ayant une antenne selon la revendication 1, dans lequel une extrémité supérieure du corps de tube télescopique (122) est en outre reliée à une couverture (124), et la couverture (124) est capable de s'engager par encliquetage avec l'extrémité ouverte du corps en tube métallique (112).
